# EUROPÄISCHE PATENTSCHRIFT

(11) **EP 1 658 212 B1**
(45) Veröffentlichungstag und Bekanntmachung des Hinweises auf die Patenterteilung: **07.03.2007**
(21) Anmeldenummer: 04766409.9
(22) Anmeldetag: 04.08.2004
(51) Int. Cl.: B60T 11/236, F16J 15/16

(54) **ZYLINDER INSBESONDERE FÜR HYDRAULISCHE KRAFTFAHRZEUGBREMSANLAGEN**
CYLINDER, IN PARTICULAR FOR A MOTOR VEHICLE HYDRAULIC BRAKE SYSTEM
CYLINDRE, DESTINE NOTAMMENT A DES SYSTEMES DE FREINAGE HYDRAULIQUES DE VEHICULES AUTOMOBILES

(30) Priorität: 18.08.2003 DE 10338416; 26.03.2004 DE 102004014867
(43) Veröffentlichungstag der Anmeldung: 24.05.2006
(73) Patentinhaber: Continental Teves AG & Co. oHG, 60488 Frankfurt am Main (DE)
(72) Erfinder: DROTT, Peter, 65936 Frankfurt/M (DE); KÖNIG, Harald, 61239 Ober- Mörlen (DE); JUNGMANN, Udo, 64546 Mörfelden (DE); BISCHOFF, Andreas, 61118 Bad Vilbel (DE)
(86) Internationale Anmeldenummer: PCT/EP2004/051703
(87) Internationale Veröffentlichungsnummer: WO 2005/019007

(56) Entgegenhaltungen:
- EP-A- 0 889 265
- DE-A- 4 323 266
- DE-A- 10 047 329
- DE-A- 10 120 913
- DE-B- 1 151 155
- GB-A- 992 123
- US-A- 2 340 466
- US-A- 5 429 374

## Beschreibung

Die Erfindung betrifft eine draulische Kraftfahrzeugbremsanlage mit Fahrdynamikregelung gemäß dem Oberbegriff des Anspruchs 1.

Eine derartige Kraftfahrzeugbremsanlage ist beispielsweise aus der DE 101 20 913 A1 bekannt. Dessen Hauptzylinders weist eine Dichtmanschette mit einer dynamisch beaufschlagten Innendichtlippe, einer statisch beaufschlagten Außendichtlippe sowie einem eben ausgebildeten Manschettenrücken auf. Nachteilig ist hierbei, dass sich die Dichtmanschette mit dem Manschettenrücken an einer Seitenwand der Ringnut festsaugen kann.

Die Dichtmanschette erfüllt die Aufgabe eines Rückschlagventils, welches einerseits Druckräume bei Betätigung des Hauptzylinders abdichtet und somit ein Druckaufbau in diesen ermöglicht und andererseits bei einem Eingriff der Fahrdynamikregelung, wie beispielsweise ESP oder ASR, ein Nachsaugen aus einem Ausgleichsbehälter durch den Haupt-Zylinder erlaubt, wobei Druckmittel die Außendichtlippe der Dichtmanschette überströmt.

Die Dichtfunktion der Dichtlippen muss für einen fehlerfreien Betrieb des Haupt-Zylinders gewährleistet sein. Da die statisch beanspruchte Außendichtlippe für die überströmbarkeit relativ elastisch ausgeführt sein muss, kann es, wie Untersuchungen gezeigt haben, durch Beschädigung oder Schmutzpartikel zur einer Undichtigkeit der Dichtfläche an der Außendichtlippe kommen.

Der Erfindung liegt daher die Aufgabe zugrunde, eine Kraftfahrzeugbremsanlage mit einem dahingehend verbesserten Zylinder bereitzustellen.

Erfindungsgemäß wird die Aufgabe dadurch gelöst, dass der Manschettenrücken uneben ausgebildet ist und wenigstens eine umlaufende Dichtfläche aufweist. Diese Dichtfläche stellt eine Redundanz zu der Dichtfläche der Außendichtlippe dar, wobei gleichzeitig die Robustheit des Haupt-Zylinders verbessert wird. Ein weiterer Vorteil der Dichtfläche am Manschettenrücken wird dadurch erzielt, dass zwischen der zweiten Dichtfläche an der Außendichtlippe und der Dichtfläche am Manschettenrücken ein gewisses Druckmittelvolumen in einem Außenfersenbereich der Dichtmanschette eingeschlossen und damit eine Verschiebung der Dichtmanschette in Richtung des Bodens der Ringnut verhindert wird. Die Anlage der Dichtflächen wird dadurch gewährleistet.

In vorteilhafter Weiterbildung der Erfindung weist der Manschettenrücken eine umlaufende, kreisringförmige Fläche auf, welche von radialen, nutenförmigen Ausnehmungen nur teilweise durchbrochen ist, so dass in einem äußeren Randbereich des Manschettenrückens eine ausnehmungsfreie, kreisringförmige, umlaufende Dichtfläche vorliegt. Die nutenförmigen Ausnehmungen verbessern das Überströmen der Außendichtlippe im Falle eines Fahrdynamikregeleingriffes, da der Strömungsquerschnitt vergrößert wird.

Eine besonders einfache Ausgestaltung der Dichtmanschette wird dadurch erzielt, dass der Manschettenrücken einen umlaufenden Dichtwulst als Dichtfläche aufweist.

Eine weitere vorteilhafte Ausführungsform der Erfindung sieht vor, am Manschettenrücken zwei umlaufende Dichtflächen vorzusehen. Dadurch wird eine weitere Redundanz der Dichtflächen geschaffen, wobei der Manschettenrücken vorzugsweise zwei umlaufende Dichtwulste als Dichtflächen aufweist.

In vorteilhafter Weiterbildung der Erfindung weist die Dichtmanschette zwischen der Innendichtlippe und der Außendichtlippe einen axialen Vorsprung auf, welcher die Dichtlippen in axialer Richtung überragt. Der Vorsprung erhöht einerseits die Robustheit der Dichtmanschette und gewährleistet andererseits, dass die dynamisch beanspruchte Innendichtlippe nicht in einen Spalt zwischen Gehäuse und Plungerkolben eingeklemmt und die statisch beanspruchte Außendichtlippe durch Anschlagen an einer Seitenwand der Ringnut verformt werden kann.

Nachstehend wird die Erfindung anhand der Zeichnung erläutert, welche Ausführungsformen zeigt. Es zeigt jeweils stark schematisiert:
- Figur 1: eine Teilansicht einer ersten Ausführungsform eines erfindungsgemäßen Haupt-Zylinders im Längsschnitt;
- Figur 2: eine Teilansicht einer zweiten Ausführungsform eines erfindungsgemäßen Haupt-Zylinders im Längsschnitt;
- Figur 3: eine räumliche Ansicht einer Dichtmanschette einer dritten Ausführungsform eines erfindungsgemäßen Hauptzylinders und
- Figur 4: eine Teilansicht der Dichtmanschette nach Fig. 3 im Längsschnitt.

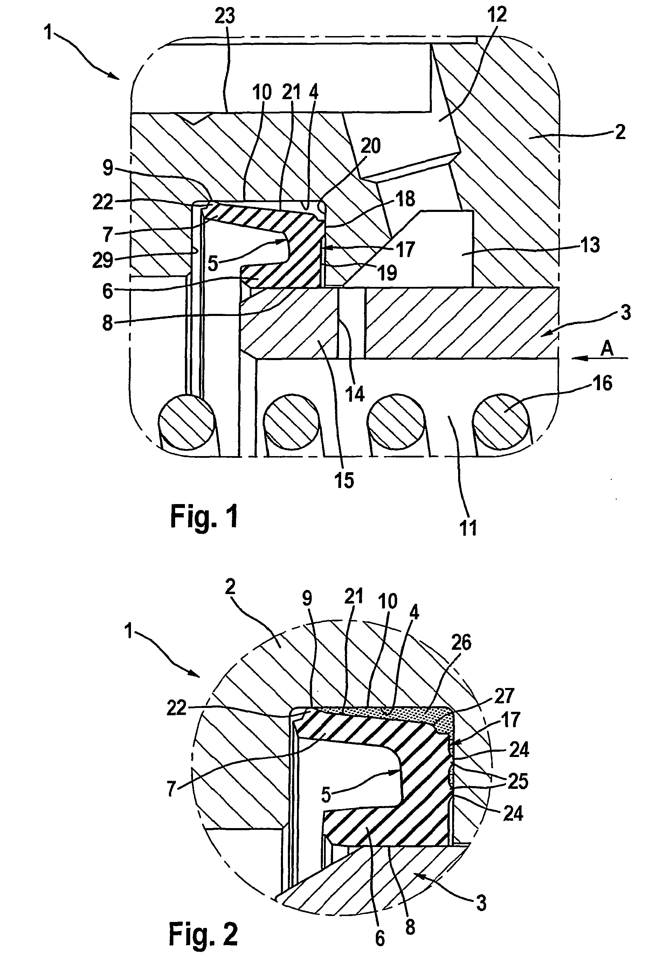

Fig. 1 zeigt in einer Teilansicht die für die Erfindung wesentlichen Teile einer ersten Ausführungsform eines Haupt-Zylinders, welcher als Hauptzylinder 1 für hydraulische Kraftfahrzeugbremsanlagen in Plunger- und Tandembauweise ausgebildet ist. Die Funktionsweise eines derartigen Hauptzylinders 1 ist grundsätzlich bekannt, so dass weitgehend nur die erfindungswesentlichen Merkmale beschrieben werden. Außerdem sind die zwei hintereinander angeordneten Druckkreise des Hauptzylinders 1 in Tandembauweise in ihrem Aufbau und ihrer Funktionsweise nahezu identisch, so dass nur ein Druckkreis beschrieben wird.

Der in einer Teilansicht dargestellte Druckkreis des Hauptzylinders 1 umfasst einen, in einem Gehäuse 2 verschiebbaren Plungerkolben 3, wobei in einer Ringnut 4 des Gehäuses 2 eine kreisringförmige Dichtmanschette 5 mit einer dynamisch beaufschlagten Innendichtlippe 6 sowie mit einer statisch beaufschlagten Außendichtlippe 7 vorgesehen ist. Die dynamisch beaufschlagte Innendichtlippe 6 liegt mit einer ersten Dichtfläche 8 an dem Plungerkolben 3 an und die statisch beaufschlagte Außendichtlippe 7 liegt mit einer zweiten Dichtfläche 9 an einem Boden 10 der Ringnut 4 an.

Ein Druckraum 11 ist in einem, in Fig. 1 dargestellten, unbetätigten Zustand des Hauptzylinders 1 über einen Druckmittelkanal 12 und eine Befüllnut 13 im Gehäuse 2 sowie über eine Bohrung 14 in einer topfförmigen Wandung 15 des Plungerkolbens 3 mit einem nicht dargestellten, drucklosen Ausgleichsbehälter verbunden. Der Plungerkolben 3 ist dabei mittels einer Druckfeder 16 vorgespannt.

Zur Betätigung wird der Plungerkolben 3 in Betätigungsrichtung A verschoben. Dabei wird die Bewegung des Plungerkolbens 3 über die Druckfeder 16 auf den nicht gezeigten zweiten Druckkreis übertragen. Sobald sich die Bohrung 14 im Bereich der Dichtmanschette 5 befindet, ist der sogenannte Leerweg des Hauptzylinders 1 durchfahren, da kein Druckmittel mehr von der Befüllnut 13 durch die Bohrung 14 in den Druckraum 11 gelangen kann. Die Verbindung des Druckraumes 11 mit dem Ausgleichbehälter ist unterbrochen. Im Druckraum 11, welcher jetzt mittels der Dichtmanschette 5 abgedichtet ist, baut sich Druck auf. Die Innendichtlippe 6 sowie die Außendichtlippe 7 werden dabei mit ihren Dichtflächen 8,9 durch den sich aufbauenden Druck im Druckraum 11 an dem Plungerkolben 3 bzw. dem Boden 10 der Ringnut 4 in Anlage gehalten und dichten dadurch ab. Gleichzeitig wird ein Manschettenrücken 17 der Dichtmanschette 5 mit einer Dichtfläche 18 durch den Druckaufbau an eine erste Seitenwand 20 der Ringnut 4 gepresst. Dadurch wird eine, in Bremskreisen aufgeteilte Betätigung von nicht dargestellten Radbremsen ermöglicht, welche hydraulisch über eine Hydraulikeinheit mit Elektromagnetventilen an die Druckräume des Hauptzylinders 1 angeschlossenen sind, so dass eine elektronisch geregelte Bremsbetätigung (ABS) oder eine Fahrstabilitätsregelung (ESP) ermöglicht wird.

Bei einem ESP-Eingriff kann es notwendig sein, bei betätigtem Plungerkolben 3 Druckmittel aus dem Ausgleichsbehälter über den Druckraum 11 in Richtung Radbremsen nachzusaugen, was vorzugsweise mittels einer Pumpe erfolgt, deren Eingang wahlweise mit den Druckräumen des Hauptzylinders 1 oder mit den Radbremsen verbindbar ist, um in Richtung Radbremsen oder in Richtung Hauptzylinder 1 zu fördern (Rückförderprinzip). Hierzu wird die Außendichtlippe 7 der Dichtmanschette 5 überströmt, indem diese durch den Saugdruck in Richtung der Innendichtlippe 6 umklappt und hierdurch die Dichtfläche 9 nicht mehr am Boden 10 der Ringnut anliegt.

Wie aus Fig. 1 hervorgeht, weist die Dichtmanschette 5 an dem Manschettenrücken 17 die umlaufende, kreisringförmige Dichtfläche 18 auf, welche eine Redundanz zur zweiten Dichtfläche 9 der Außendichtlippe 7 darstellt, da die zweite Dichtfläche 9, welche an einem, an einer Außenseite 21 der Außendichtlippe 7 angeordneten, umlaufenden Wulst 22 ausgebildet ist, durch Beschädigung oder Schmutzpartikel im Druckmittel undicht werden kann.

Der Manschettenrücken 17 ist als umlaufende, kreisringförmige Fläche ausgebildet, welche von radialen, nutenförmigen Ausnehmungen 19 nur teilweise durchbrochen ist. Dadurch entsteht in einem äußeren Randbereich 31 eine ausnehmungsfreie, kreisringförmige, umlaufende Fläche, welche die Dichtfläche 18 darstellt. Die nutenförmigen Ausnehmungen 19 dienen einerseits durch eine Vergrößerung des Strömungsquerschnittes dem verbesserten Füllen des Druckraumes 11 bei einem Überströmen des Druckmittels der Außendichtlippe 7, andererseits verhindern sie eine Ansaugung des Manschettenrückens 17 an der ersten Seitenwand 20 der Ringnut 4.

Im Falle eines ESP-Eingriffes wird, wie vorstehend beschrieben, Druckmittel mittels einer Pumpe aus dem Ausgleichsbehälter, welcher mittels nicht gezeigten Behälterstutzen in Behälterbohrungen 23 des Gehäuses 2 angeordnet ist, über den Druckmittelkanal 12, die Befüllnut 13, einen geringen Spalt zwischen Gehäuse 2 und Plungerkolben 3, die in Richtung Innendichtlippe 6 umgeklappte Außendichtlippe 7 und den Druckraum 11 in Richtung Radbremsen nachgesaugt. Die zweite Dichtfläche 9 wird dabei durch das Umklappen der Außendichtlippe 7 unwirksam. Die Dichtfläche 18 am Manschettenrücken 17 wird durch den Saugdruck von der Seitenwand 20 entfernt, indem sich die Dichtmanschette 5 in der Ringnut 4 geringfügig in Betätigungsrichtung A verschieben kann. Durch die radialen, nutenförmigen Ausnehmungen 19 wird der Strömungsquerschnitt vergrößert, so dass ausreichend Druckmittel die Dichtmanschette 5 überströmen kann.

Fig. 2 zeigt in einer Teilansicht die für die Erfindung wesentlichen Teile einer zweiten Ausführungsform eines Hauptzylinders 1 für Kraftfahrzeugbremsanlagen in Plunger- und Tandembauweise.

Wie aus Fig. 2 ersichtlich ist, unterscheidet sich die Dichtmanschette dieser Ausführungsform zu der gemäß Fig. 1 beschriebenen Dichtmanschette lediglich in der Ausgestaltung des Manschettenrückens 17. Daher sind gleiche oder übereinstimmende Bauteile in Fig. 2 mit den Bezugsziffern der Fig. 1 gekennzeichnet und werden nicht weiter erläutert.

Im Unterschied zu der gemäß Fig. 1 beschriebenen Ausführungsform weist der Manschettenrücken 17 der zweiten Ausführungsform zwei Dichtwulste 25 als Dichtflächen 24 auf.

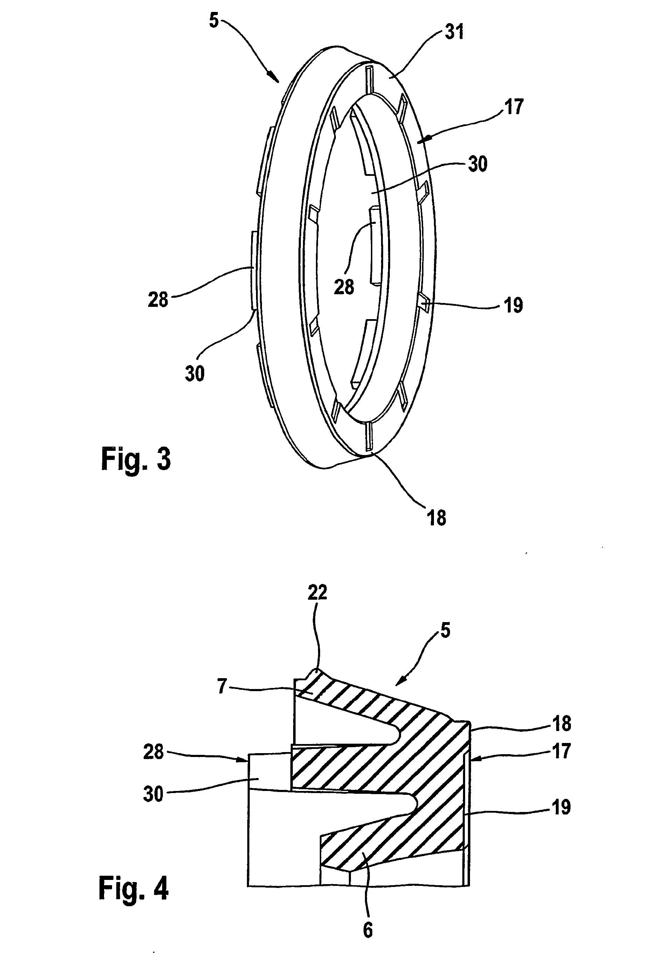

Neben der Redundanz wird hier ein weiterer Vorteil der Dichtflächen 24 am Manschettenrücken 17 deutlich. Zwischen der zweiten Dichtfläche 9 an der Außendichtlippe 7 und den Dichtflächen 24 am Manschettenrücken 17 wird bei Betätigung des Hauptzylinders 1 ein gewisses Druckmittelvolumen 26 in einem Außenfersenbereich 27 der Dichtmanschette 5 eingeschlossen. Eine Verschiebung der Dichtmanschette 5 in Richtung des Bodens 10 der Ringnut 4 wird dadurch verhindert und die sichere Anlage der Innendichtlippe 6 und der Außendichtlippe 7 an dem Plungerkolben 3 bzw. dem Boden 10 der Ringnut 4 wird dadurch gewährleistet. Dieser Vorteil tritt natürlich auch bei der gemäß Fig.1 beschriebenen Ausführungsform sowie bei der nachfolgend beschriebenen Ausführungsform gemäß Fig. 3 und 4 auf.

Fig. 3 und Fig. 4 zeigen eine Dichtmanschette einer dritten Ausführungsform eines erfindungsgemäßen, Hauptzylinders 1 wobei Fig. 3 eine räumliche Ansicht der Dichtmanschette 5 zeigt und in Fig. 4 eine Teilansicht der Dichtmanschette 5 im Längsschnitt gezeigt ist.

Die Dichtmanschette 5 dieser Ausführungsform unterscheidet sich zu der Dichtmanschette gemäß Fig. 1 lediglich darin, dass zwischen der Innendichtlippe 6 und der Außendichtlippe 7 ein axialer Vorsprung 28 vorgesehen ist, welcher die beiden Dichtlippen 6, 7 in axialer Richtung überragt. Daher sind gleiche oder übereinstimmende Bauteile in den Fig. 3 und 4 mit den Bezugsziffern der Fig. 1 gekennzeichnet und werden nicht weiter erläutert.

Der Vorsprung 28 erhöht einerseits die Robustheit der Dichtmanschette 5 und gewährleistet andererseits, dass die dynamisch beanspruchte Innendichtlippe 6 nicht in einen Spalt zwischen Gehäuse 2 und Plungerkolben 3 eingeklemmt und die statisch beanspruchte Außendichtlippe 7 durch Anschlagen an einer in Fig. 1 gezeigten zweiten Seitenwand 29 der Ringnut 4 verformt werden kann. Durch radiale Durchbrüche 30 des Vorsprunges 28 ist sichergestellt, dass Druckmittel bei einer Anlage des Vorsprunges 28 an der zweiten Seitenwand 29 über die Dichtmanschette 5 in den Druckraum fließen kann.

Aus Fig. 4 wird der kreisringförmige Aufbau der Dichtmanschette 5 ersichtlich und es wird deutlich, dass der Manschettenrücken 17 als umlaufende, kreisringförmige Fläche ausgebildet ist, welche von den radialen, nutenförmigen Ausnehmungen 19 lediglich teilweise durchbrochen wird, sodass in dem äußeren Randbereich 31 des Manschettenrückens 17 die umlaufende, kreisringförmige Dichtfläche 18 vorliegt. Die Ausnehmungen 19 sind, wie aus Fig. 4 hervorgeht, in gleichen Abständen zueinander sowie sternförmig auf dem Manschettenrücken 17 angeordnet. Hinsichtlich der Anordnung sind jedoch auch andere Varianten denkbar.

Ein gemäß Fig. 3 und 4 beschriebener und dargestellter Vorsprung 28 ist ebenso bei den Dichtmanschetten der ersten und zweiten Ausführungsform vorsehbar.

### Bezugszeichenliste

- 1: Hauptzylinder
- 2: Gehäuse
- 3: Plungerkolben
- 4: Ringnut
- 5: Dichtmanschette
- 6: Innendichtlippe
- 7: Außendichtlippe
- 8: Dichtfläche
- 9: Dichtfläche
- 10: Boden
- 11: Druckraum
- 12: Druckmittelkanal
- 13: Befüllnut
- 14: Bohrung
- 15: Wandung
- 16: Druckfeder
- 17: Manschettenrücken
- 18: Dichtfläche
- 19: Ausnehmung
- 20: Seitenwand
- 21: Außenseite
- 22: Wulst
- 23: Behälterbohrung
- 24: Dichtfläche
- 25: Dichtwulst
- 26: Druckmittelvolumen
- 27: Außenfersenbereich
- 28: Vorsprung
- 29: Seitenwand
- 30: Durchbruch
- 31: Randbereich

- A: Betätigungsrichtung

## Patentansprüche

1. Hydraulische Kraftfahrzeugbremsanlage mit Fahrdynamikregelung umfassend einen Hauptzylinder mit wenigstens einem, in einem Gehäuse (2) verschiebbaren Plungerkolben (3), welcher einen Druckraum (11) begrenzt, der mit Radbremsen verbindbar ist, mit wenigstens einer, in einer Ringnut (4) des Gehäuses (2) vorgesehenen, kreisringförmigen Dichtmanschette (5) mit einer dynamisch beaufschlagten Innendichtlippe (6), welche mit einer ersten Dichtfläche (8) an dem Plungerkolben (3) anliegt, und einer statisch beaufschlagten Außendichtlippe (7), welche mit einer zweiten Dichtfläche (9) an einem Boden (10) der Ringnut (4) anliegt, sowie einem Manschettenrücken (17), wobei bei einem Eingriff der Fahrdynamikregelung eine Pumpe Druckmittel aus einem Ausgleichsbehälter über den Druckraum (11) in Richtung Radbremsen fördert und das Druckmittel die Außendichtlippe (7) überströmt, **dadurch gekennzeichnet, dass** der Manschettenrücken (17) uneben ausgebildet ist und wenigstens eine umlaufende Dichtfläche (18;24) aufweist.

2. Hydraulische Kraftfahrzeugbremsanlage nach Anspruch 1, **dadurch gekennzeichnet, dass** der Manschettenrücken (17) eine umlaufende, kreisringförmige Fläche aufweist, welche von radialen, nutenförmigen Ausnehmungen (19) nur teilweise durchbrochen ist, so dass in einem äußeren Randbereich (31) des Manschettenrückens (17) eine ausnehmungsfreie, kreisringförmige, umlaufende Dichtfläche (18) vorliegt.

3. Hydraulische Kraftfahrzeugbremsanlage nach Anspruch 1, **dadurch gekennzeichnet, dass** der Manschettenrücken (17) einen umlaufenden Dichtwulst (25) als Dichtfläche (24)aufweist.

4. Hydraulische Kraftfahrzeugbremsanlage nach Anspruch 1, **dadurch gekennzeichnet, dass** am Manschettenrücken (17) zwei umlaufende Dichtflächen (24) vorgesehen sind.

5. Hydraulische Kraftfahrzeugbremsanlage nach Anspruch 4, **dadurch gekennzeichnet, dass** der Manschettenrücken (17) zwei umlaufende Dichtwulste (25) als Dichtflächen (24)aufweist.

6. Hydraulische Kraftfahrzeugbremsanlage nach einem der vorangegangenen Ansprüche, **dadurch gekennzeichnet, dass** die Dichtmanschette (5) zwischen der Innendichtlippe (6) und der Außendichtlippe (7) einen axialen Vorsprung (28) aufweist, welcher die Dichtlippen (6,7) in axialer Richtung überragt.

## Claims

1. Motor vehicle hydraulic brake system with driving dynamics control comprising a master cylinder with at least one plunger piston (3) displaceable in a housing (2) and limiting a pressure chamber (11) that is connectible to wheel brakes, with at least one circular sealing collar (5) provided in an annular groove (4) of the housing (2) and having a dynamically applied inside sealing lip (6), which abuts with a first sealing surface (8) on the plunger piston (3), and a statically applied outside sealing lip (7), which abuts with a second sealing surface (9) on a bottom (10) of the annular groove (4), as well as with a collar back (17), wherein in the event of intervention of the driving dynamics control, a pump supplies pressure fluid from a supply reservoir via the pressure chamber (11) in the direction of the wheel brakes and the pressure fluid flows over the outside sealing lip (7),
**characterized in that** the collar back (17) has an uneven design and includes at least one circumferential sealing surface (18; 24).

2. Motor vehicle hydraulic brake system as claimed in claim 1,
**characterized in that** the collar back (17) includes a circumferential circular surface, which is interrupted by radial, groove-type recesses (19) only in part so that a circular, circumferential sealing surface (18) without recesses is achieved in an outside fringe area (31) of the collar back (17).

3. Motor vehicle hydraulic brake system as claimed in claim 1,
**characterized in that** the collar back (17) includes a circumferential sealing bead (25) as a sealing surface (24).

4. Motor vehicle hydraulic brake system as claimed in claim 1,
**characterized in that** two circumferential sealing surfaces (24) are provided on the collar back (17).

5. Motor vehicle hydraulic brake system as claimed in claim 4,
**characterized in that** the collar back (17) includes two circumferential sealing beads (25) as sealing surfaces (24).

6. Motor vehicle hydraulic brake system as claimed in any one of the preceding claims,
**characterized in that** the sealing collar (5) has an axial projection (28) between the inside sealing lip (6) and the outside sealing lip (7), towering over the sealing lips (6, 7) in an axial direction.

## Revendications

1. Système de freinage hydraulique de véhicule automobile avec régulation de la dynamique de la conduite comprenant un cylindre principal avec au moins un piston plongeur (3) coulissant dans un boîtier (2), qui délimite une chambre sous pression (11) laquelle peut être reliée à des freins de roue, avec au moins un manchon d'étanchéité (5) en forme d'anneau circulaire, prévu dans une rainure annulaire (4) du boîtier (2), avec une lèvre d'étanchéité intérieure (6) sollicitée dynamiquement, laquelle s'applique par une première surface d'étanchéité (8) contre le piston plongeur (3), et avec une lèvre d'étanchéité extérieure (7) sollicitée statiquement qui s'applique, par une seconde surface d'étanchéité (9), contre un fond (10) de la rainure annulaire (4), ainsi qu'avec un dos de manchon (17), une pompe envoyant, lors d'une intervention de la régulation de la dynamique de la conduite, un fluide sous pression en direction des freins des roues, à travers la chambre sous pression (11), à partir d'un réservoir de compensation, et le fluide sous pression passant sur la lèvre d'étanchéité extérieure (7), **caractérisé en ce que** le dos de manchon (17) est réalisé non plan et présente au moins une surface d'étanchéité (18 ; 24) périphérique.

2. Système de freinage hydraulique de véhicule automobile selon la revendication 1, **caractérisé en ce que** le dos de manchon (17) présente une surface périphérique en forme d'anneau circulaire, qui n'est interrompue qu'en partie par des évidements (19) radiaux en forme de rainure, ce qui fait que dans une zone de bordure extérieure (31) du dos de manchon (17) se trouve une surface d'étanchéité (18) périphérique, en forme d'anneau circulaire, ne présentant pas d'évidements.

3. Système de freinage hydraulique de véhicule automobile selon la revendication 1, **caractérisé en ce que** le dos de manchon (17) comporte un bourrelet d'étanchéité (25) périphérique servant de surface d'étanchéité (24).

4. Système de freinage hydraulique de véhicule automobile selon la revendication 1, **caractérisé en ce que** sur le dos de manchon (17) sont prévues deux surfaces d'étanchéité (24) périphériques.

5. Système de freinage hydraulique de véhicule automobile selon la revendication 4, **caractérisé en ce que** le dos de manchon (17) comporte deux bourrelets d'étanchéité (25) périphériques servant de surfaces d'étanchéité (24).

6. Système de freinage hydraulique de véhicule automobile selon l'une des revendications précédentes, **caractérisé en ce que** le manchon d'étanchéité (5) présente, entre la lèvre d'étanchéité intérieure (6) et la lèvre d'étanchéité extérieure (7), une saillie axiale (28) qui dépasse des lèvres d'étanchéité (6, 7) dans la direction axiale.
